# EUROPEAN PATENT SPECIFICATION

(11) **EP 4 378 581 B1**
(45) Date of publication and mention of the grant of the patent: **25.11.2026**
(21) Application number: 22849382.1
(22) Date of filing: 22.07.2022
(51) Int. Cl.: B01D 53/94, B01J 35/57, F01N 3/28

(54) **SUBSTRATE FOR CARRYING CATALYST AND CATALYST CARRIER**
SUBSTRAT ZUR AUFNAHME EINES KATALYSATORS UND KATALYSATORTRÄGER
SUBSTRAT DESTINÉ À PORTER UN CATALYSEUR ET SUPPORT DE CATALYSEUR

(30) Priority: 30.07.2021 JP 2021125353
(43) Date of publication of application: 05.06.2024
(73) Proprietor: NIPPON STEEL Chemical & Material Co., Ltd., Tokyo 103-0027 (JP)
(72) Inventor: GOTO Seiichi, Tokyo 103-0027 (JP); GOTO Yasuhide, Tokyo 103-0027 (JP); KONYA Shogo, Tokyo 103-0027 (JP); LEI Zhe, Tokyo 103-0027 (JP)
(74) Representative: J A Kemp LLP
(86) International application number: PCT/JP2022/028428
(87) International publication number: WO 2023/008320

(56) References cited:
- EP-A1- 3 666 377
- EP-B1- 1 529 156
- WO-A1-2019/031080
- DE-A1- 3 744 020
- JP-A- 2005 535 454
- JP-A- 2010 201 413
- JP-A- 2011 156 505
- JP-A- H08 173 820
- JP-A- H09 117 672
- JP-A- H09 150 217
- JP-B1- 6 888 152
- US-B2- 8 722 572

## Description

### Technical Field

The present invention relates to a substrate for carrying catalyst and a catalyst carrier carrying catalyst on the substrate.

### Background Art

A catalyst carrier formed by fitting a honeycomb body into an outer mantle made of a heat-resistant alloy is widely known as a catalyst carrier for purifying exhaust gas discharged from a vehicle. Honeycomb bodies are mainly classified into laminated type honeycomb bodies and wound type honeycomb bodies. A laminated type honeycomb body is configured by alternately laminating flat foils made of metal foils and corrugated foils obtained through corrugating processing of metal foils. A wound type honeycomb body is formed by spirally winding a flat foil and a corrugated foil in a stacked state.

Due to the nature of the manufacturing process, a wound type catalyst carrier has a cavity in a cylindrical shape (hereinafter also referred to as a winding core portion) formed in the central portion (see, for example, Patent Literature 1). Since the winding core portion has a larger opening area than the individual flow paths (hereinafter also referred to as purification flow paths) formed by a flat foil and a corrugated foil, unpurified exhaust gas is likely to escape from the winding core portion. Increase in the amount of unpurified exhaust gas escaping from the winding core portion decreases the amount of exhaust gas passing through the purification flow path, making it impossible to fully express the exhaust gas purification performance of the catalyst carrier.

Therefore, techniques have been proposed to prevent gas from escaping from the winding core portion. Patent Literature 2 discloses a technique in which a metal catalyst carrier, having a winding core portion with a diameter of 3 to 5 mm (5 mm in the example), has an insert (metallic plug) placed in the winding core portion and thereby prevents gas from escaping from the winding core portion.

Patent Literature 3 discloses a method of manufacturing a honeycomb body in a metal substrate, which method includes: preparing a winding shaft formed with a slit in the middle to have two split sections, and passing an end portion of a metal flat foil through the winding shaft and clamping the portion by the shaft; rotating the winding shaft by 1/4 turn or more to wind the flat foil around the shaft; subsequently performing initial winding, the initial winding being winding a corrugated foil while sandwiching it between the flat foil and the winding shaft or between the flat foil and the flat foil wound around the winding shaft; and subsequently winding the flat foil and corrugated foil in a spiral shape while laminating them, to form a honeycomb body in a cylindrical shape and then remove the winding shaft. Further, Figure 2 of Patent Literature 3 discloses a process diagram in which an end portion of the flat foil (hereinafter also referred to as "beam-shaped flat portion") is extended into the winding core portion.

Patent Literature 4 discloses a technique in which a metal catalyst carrier includes a honeycomb body in which starting end portions of a corrugated metal foil and a flat-plate-shaped metal foil are stacked and wound together in multiple layers; and a restricting portion is placed in a winding core portion of the honeycomb body, the restricting portion is formed by expanding between the starting end portions of both the metal foils (the corrugated foil and the flat foil), thereby restricting flow of exhaust gas in the winding core portion. Figure 4 of Patent Literature 4 discloses a curved metal foil extending into the winding core portion.

On the other hand, with the rise in the price of precious metals used as catalysts, there have been proposed catalyst carriers that reduce amounts of precious metals to be used. For example, Patent Literature 5 and Patent Literature 6 disclose a honeycomb body that reduces the amount of precious metal to be used by forming holes that penetrate in the thickness direction in the foil that forms the honeycomb body. Since a catalyst carrier in which holes are formed in the foil has a small heat capacity, the rate of temperature rise of the honeycomb body is increased, thus the catalyst can be activated at an early stage. The catalyst carrier disclosed in Figure 1 of Patent Literature 6 can be manufactured through the manufacturing method disclosed in Patent Literature 3.
US8722572B2 discloses A metal catalyst substrate equipped with a honeycomb body and a restricting portion formed at a core portion of the honeycomb body to restrict flow of exhaust gas.
EP3666377A1 discloses an exhaust-gas-purifying perforated metal substrate capable of achieving low pressure loss, in which a corrugated foil and a flat foil are layered and made into a cylindrical shape.
EP1529156B1 discloses a metal honeycomb body consisting of at least partially perforated sheet metal layers.
JP6888152B1 discloses a catalyst-supporting substrate formed by at least partially joining a honeycomb body formed by winding flat and corrugated foils with a metallic outer cylinder, the flat and corrugated foils having a plurality of holes penetrating the thickness direction.
Relevant background to the invention is also found in DE3744020A1.

### Citation List

### Patent Literature

Patent Literature 1
   Japanese Patent Application Laid-Open No. 62-250950
Patent Literature 2
   Japanese Patent Application Laid-Open No. 2006-281118
Patent Literature 3
   Japanese Patent Application Laid-Open No. 8-173820
Patent Literature 4
   Japanese Patent Application Laid-Open No. 2010-201413
Patent Literature 5
   Japanese Translation of PCT International Application Publication No. 2005-535454
Patent Literature 6
   International Publication No. WO 2019/031080A1

### Summary of Invention

### Technical Problem

The metal substrate disclosed in Patent Literature 2 requires a step of disposing a plug to prevent gas from escaping in the winding core portion, thus complicating the manufacturing process and increasing the manufacturing cost. The metal substrate disclosed in Patent Literature 4 also requires a wedge-shaped jig for forming the exhaust restricting portion, thus complicating the manufacturing process.

In Patent Literature 3, extending the beam-shaped flat portion of the flat foil into the winding core portion can decrease the hydraulic diameter of the winding core portion to about 60% compared to a configuration in which the beam-shaped flat portion is not extended. This configuration prevents exhaust gas from escaping in the winding core portion, enabling a simplified manufacturing process. Here, Patent Literature 3 does not describe the opening diameter of the winding core portion but the diameter is normally about 3 to 5 mm (for example, see Patent Literature 2). In consideration of this, the opening diameter in Literature 3 is supposed to be about the same.

When a honeycomb body in which holes are formed in a foil (for example, Patent Literatures 5 and 6) is continuously manufactured using the manufacturing method disclosed in Patent Literature 3, it is preferable to use a flat foil that has undergone perforating processing and has been wound into a coil shape in advance, to cut the flat foil after completing one honeycomb body, and then to manufacture the next honeycomb body. In other words, holes are inevitably formed also in the portion of the flat foil corresponding to the beam-shaped flat portion.

The inventors of the present invention have found a problem in which, when a honeycomb body in which holes are formed in the beam-shaped flat portion (the opening diameter of the winding core portion is about 3 to 5 mm) is used as a catalytic converter for exhaust gas purification, cracks start from the holes opened in the beam-shaped flat portion and the beam-shaped flat portion of the flat foil extending into the winding core portion undergoes early fatigue failure. Fatigue failure of the beam-shaped flat portion naturally increases the hydraulic diameter of the opening of the winding core portion, resulting in decrease in purification performance.

### Solution to Problem

### (Development History of The Present Invention)

The development history of the present invention described above will be explained in more detail.

First, the present inventors have conducted heating/cooling cycle tests with an engine bench to evaluate the structural durability of conventional substrates for carrying catalyst (corresponding to Patent Literature 3 mentioned above) having beam-shaped flat portions extending into the winding core portion having inner diameters of 3 mm to 5 mm. For the heating/cooling cycle pattern, a temperature pattern was selected in which the inlet side temperature of the gas flowing into the substrate for carrying catalyst was changed "between 900°C and 100°C or lower." As a result, the fatigue failure of the beam-shaped flat portion was successfully prevented, and sufficient structural durability was obtained (see Reference Examples in the "Examples" section below).

However, as described in the "Background Art" section above, there have also been conventionally proposed the substrate for carrying catalyst, in which holes are formed in the foil forming the honeycomb body. Therefore, the present inventors manufactured substrates for carrying catalyst in which holes are formed in the foil (configured so that the inner diameter of the winding core portion is 3 mm to 5 mm, and holes are also formed in the beam-shaped flat portion) by using the method of manufacturing disclosed in Patent Literature 3, and conducted heating/cooling cycle tests similar to that described above on the substrate for carrying catalyst. As a result, as described in the "Technical Problem" section, there were cases in which cracks propagated from the holes opened in the beam-shaped flat portion, so that the beam-shaped flat portion got early fatigue failure, resulting in insufficient structural durability.

So, the present inventors conducted intensive studies and found that, even if holes were formed in the beam-shaped flat portion, setting the inner diameter of the winding core portion (that is, the length of the beam-shaped flat portion) to 3 mm or less made it possible to prevent early fatigue failure of the beam-shaped flat portion.

The present invention is (1) a substrate for carrying catalyst comprising: a honeycomb body formed by winding a flat foil and a corrugated foil each made of a metal foil; and an outer mantle placed at a position surrounding an outer circumferential surface of the honeycomb body, wherein a plurality of holes are formed in the flat foil and the corrugated foil, a beam-shaped flat portion extends into a winding core portion of the honeycomb body, the beam-shaped flat portion being an end portion of the flat foil or an end portion of the corrugated foil, part of the plurality of holes are formed in the beam-shaped flat portion, and the winding core portion has an inner diameter of 3 mm or less.

(2) The substrate for carrying catalyst according to the above (1), wherein the winding core portion has an inner diameter of 2.5 mm or less.

(3) The substrate for carrying catalyst according to the above (1), wherein the winding core portion has an inner diameter of 2 mm or less.

(4) The substrate for carrying catalyst according to any one of the above (1) to (3), wherein : R represents a diameter (mm) of each hole, U represents an aperture ratio (%) of the holes in the beam-shaped flat portion, V represents an inner diameter (mm) of the winding core portion, W represents a foil thickness (µm) of the metal foil, and L is formulated as L = (R + 3) × U × (V - 1) × 50/(W + |50 - W| × 0.5), (where: 0.5 ≤ R ≤ 6, 20 ≤ U ≤ 60, 1 ≤ V ≤ 3, 20 ≤ W ≤ 100), a value of L is equal to or less than a predetermined threshold value, and the predetermined threshold value is 900.

(5) The substrate for carrying catalyst according to the above (4), wherein the predetermined threshold value is 700.

(6) The substrate for carrying catalyst according to the above (4), wherein the predetermined threshold value is 500.

(7) The substrate for carrying catalyst according to the above (4), wherein the predetermined threshold value is 300.

(8) The substrate for carrying catalyst according to any one of the above (1) to (7), wherein the metal foil has a foil thickness of 70 µm or less.

(9) A catalyst carrier including: a honeycomb body formed by winding a flat foil and a corrugated foil each made of a metal foil, the honeycomb body carrying catalyst; and an outer mantle placed at a position surrounding an outer circumferential surface of the honeycomb body, wherein a plurality of holes are formed in the flat foil and the corrugated foil, a beam-shaped flat portion extends into a winding core portion of the honeycomb body, the beam-shaped flat portion being an end portion of the flat foil or an end portion of the corrugated foil, part of the plurality of holes are formed in the beam-shaped flat portion, and the winding core portion has an inner diameter of 3 mm or less.

(10) The catalyst carrier according to the above (9), in which the catalyst carrier is for purification of exhaust gas for a single-cylinder engine.

### Advantageous Effect of Invention

According to the present invention, the length of the beam-shaped flat portion, which extends into the winding core portion and has the holes formed therein, is set to 3 mm or less (that is, the inner diameter of the winding core portion is set to 3 mm or less). Thereby, fatigue failure of the beam-shaped flat portion can be less likely to occur. This can prevent increase in the diameter of the winding core portion (increase in the hydraulic diameter) due to early loss of the beam-shaped flat portion, and can prevent deterioration of purification performance.

### Brief Description of Drawings

[Figure 1] Figure 1 is a plan view of a catalyst carrier of the present embodiment viewed in an axial direction.
[Figure 2] Figure 2 is an unwinding view of a flat foil 2.
[Figure 3] Figure 3 is an enlarged view of an area A surrounded by broken lines in Figure 2.
[Figure 4] Figure 4 is a perspective view of a winding shaft.
[Figure 5] Figure 5 is a process diagram showing a process of manufacturing of a substrate for carrying catalyst (however, only an initial process).
[Figure 6] Figure 6 is a process diagram of part of the substrate for carrying catalyst (modification), corresponding to Figure 5(a).
[Figure 7] Figure 7 is a schematic perspective view of a honeycomb body.
[Figure 8] Figure 8 is an example of a flat foil having a foil portion, corresponding to a beam-shaped flat portion 2a, that does not undergo perforating processing.

### Description of Embodiments

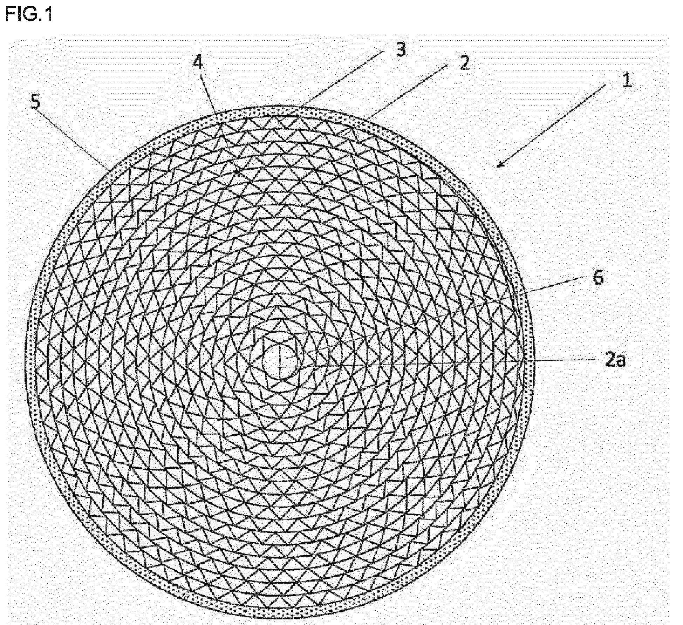

Figure 1 is a plan view of a catalyst carrier that is one embodiment of the present invention, viewed in the axial direction. The axial direction coincides with the conduction direction of exhaust gas which flows into the catalyst carrier.

With reference to Figure 1, a catalyst carrier 1 includes a honeycomb body 4 and an outer mantle 5. The honeycomb body 4 is configured as a wound body, formed by stacking a flat foil 2 and a corrugated foil 3 and winding them together. A method of winding the flat foil 2 and the corrugated foil 3 will be described later.

A winding core portion 6, which extends in a cylindrical shape in the axial direction, is formed at the center of the honeycomb body 4. A beam-shaped flat portion 2a, formed by extending an end portion of the flat foil 2 (described later), is formed in the winding core portion 6. The beam-shaped flat portion 2a is disposed across the winding core portion 6 in the radial direction over the full length of the winding core portion 6 from one end portion to the other end portion in the axial direction. Disposing the beam-shaped flat portion 2a in the winding core portion 6 reduces the flow rate of the exhaust gas flowing into the opening of the winding core portion 6 and increases the flow rate of the exhaust gas flowing through exhaust gas purification flow paths of the honeycomb body 4 (in other words, cells of the honeycomb body 4), enabling purification performance of the catalyst carrier 1 to be enhanced.

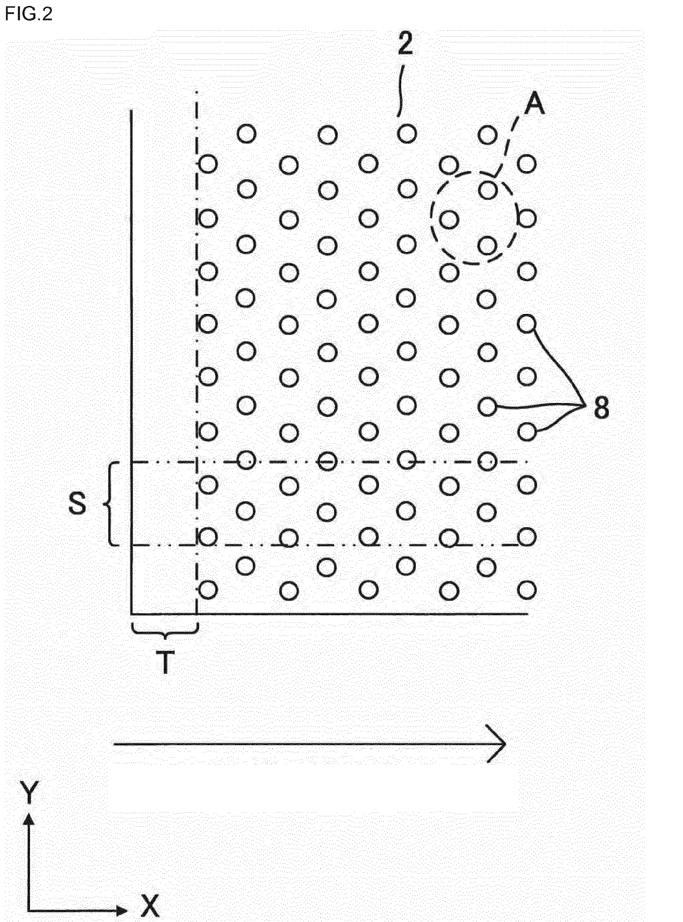

Figure 2 is an unwinding view of the flat foil 2. The X-axis direction in Figure 2 corresponds to the exhaust gas conduction direction in the honeycomb body 4 (that is, the axial direction of the honeycomb body 4). The Y-axis direction in the figure is a direction perpendicular to the X-axis and corresponds to the longitudinal direction of the flat foil 2. With reference to Figure 2, by winding the flat foil 2 and the corrugated foil 3 according to the winding method described later, the Y-axis direction end portion S of the flat foil 2 sandwiched between two-dot chain lines extends into the winding core portion 6, as a beam-shaped flat portion 2a.

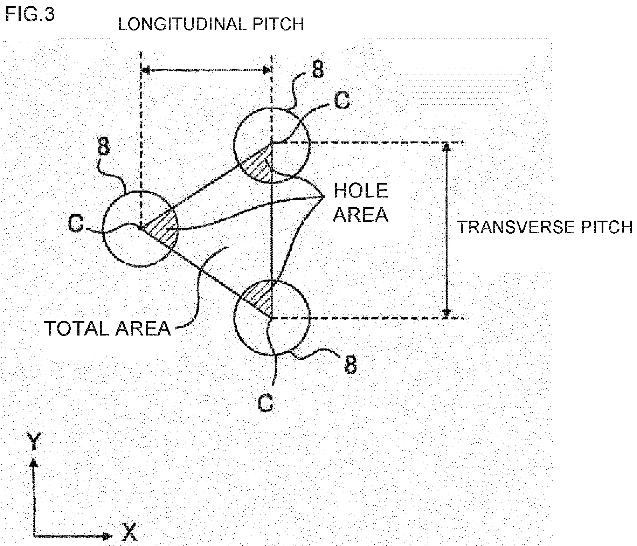

To reduce the heat capacity of the honeycomb body 4, the flat foil 2 and the corrugated foil 3 of the honeycomb body 4 undergo perforating processing to form a plurality of holes 8 penetrating in the thickness direction. The holes 8 formed in the flat foil 2 will be described below, the corrugated foil 3 also has similar holes 8 formed therein. The holes 8 can be formed in a zigzag pattern in the X-axis direction in an area of the flat foil 2 excluding a gas inlet side end portion T in the exhaust gas conducting direction. Therefore, the holes 8 are also formed in the Y-axis direction end portion S of the flat foil 2 corresponding to the beam-shaped flat portion 2a. Here, the "zigzag pattern" means a pattern in which: imaginary lines extend in the X-axis direction through intermediate positions between holes 8 adjacent in the Y-axis direction, holes 8 of a next row are arranged on the imaginary lines; and this arrangement relationship continues in the Y-axis direction. Another configuration of "zigzag pattern" may be a configuration in which: imaginary lines extend in the Y-axis direction through intermediate positions between holes 8 adjacent in the X-axis direction, holes 8 of a next row are arranged on the imaginary lines. In the three holes 8 adjacent to each other (the three holes 8 within the area A surrounded by the broken line in Figure 2), a longitudinal pitch is defined as a separation distance in the X-axis direction between the centers of gravity (the centers C of the holes 8 in this embodiment) of two holes 8 adjacent in the X-axis direction. Likewise, a transverse pitch is defined as a separation distance in the Y-direction between the centers of gravity of two holes 8 adjacent in the Y-axis direction. Here, the longitudinal pitch and the transverse pitch can be set as appropriate. Figure 3 shows an enlarged view of an area A surrounded by the broken line in Figure 2. Note that the arrangement of the holes 8 is not limited to the zigzag pattern arrangement in the X-axis direction, but may be, for example, a matrix pattern arrangement in which the holes 8 are linearly arranged in the X-axis direction and the Y-axis direction.

In the present embodiment, the holes 8 are formed in a circular shape. The diameter of each hole 8 is preferably 0.5 mm or more and 6 mm or less. If the diameter of each hole 8 is less than 0.5 mm, the holes 8 may be blocked by catalyst. Contrarily, a diameter of the holes 8 exceeding 6 mm may cause low purification performance. Therefore, the diameter of each hole 8 is preferably 0.5 mm or more and 6 mm or less. Note that the shape of the holes 8 may be other than circular shape (for example, square or elliptical shape), but a circular shape is preferable in consideration of the workability of perforating processing. In addition, since the circular shape has no corners, holes 8 made circular can have a less number of starting points of cracks than holes 8 made polygonal, enabling the honeycomb body 4 to have improved durability.

The aperture ratio of the holes 8 in the beam-shaped flat portion 2a is preferably 20% or more and 60% or less. An aperture ratio less than 20% cannot sufficiently reduce the heat capacity of the catalyst carrier 1. Contrarily, an aperture ratio exceeding 60% may decrease the strength of the honeycomb body 4 itself. Therefore, the aperture ratio of the holes 8 in the beam-shaped flat portion 2a is preferably 20% or more and 60% or less. Here, the aperture ratio will be described with reference to Figure 3 again. When there is a triangle drawn with vertexes that are the centers of gravity (the centers C of the holes 8 in this embodiment) of three holes 8 adjacent to each other, the area of the triangle is defined as a total area and the area of the portions where the triangle and the holes 8 overlap is defined as a hole area. At this time, the aperture ratio is calculated as "the ratio of the hole area to the total area". If each hole 8 has a shape other than circular shape, the aperture ratio can be similarly defined using the center of gravity of the holes 8. Also, if the holes 8 are not arranged in a zigzag pattern arrangement in the X-axis direction shown in Figure 2 (for example, in the matrix pattern arrangement described above), the aperture ratio can be calculated in accordance with the above definition. Note that the holes 8 in the beam-shaped flat portion 2a are inevitably formed in the process of opening the holes 8 in the flat foil 2, so that the aperture ratio of the holes 8 in the beam-shaped flat portion 2a substantially matches the aperture ratio of the holes 8 in the flat foil 2.

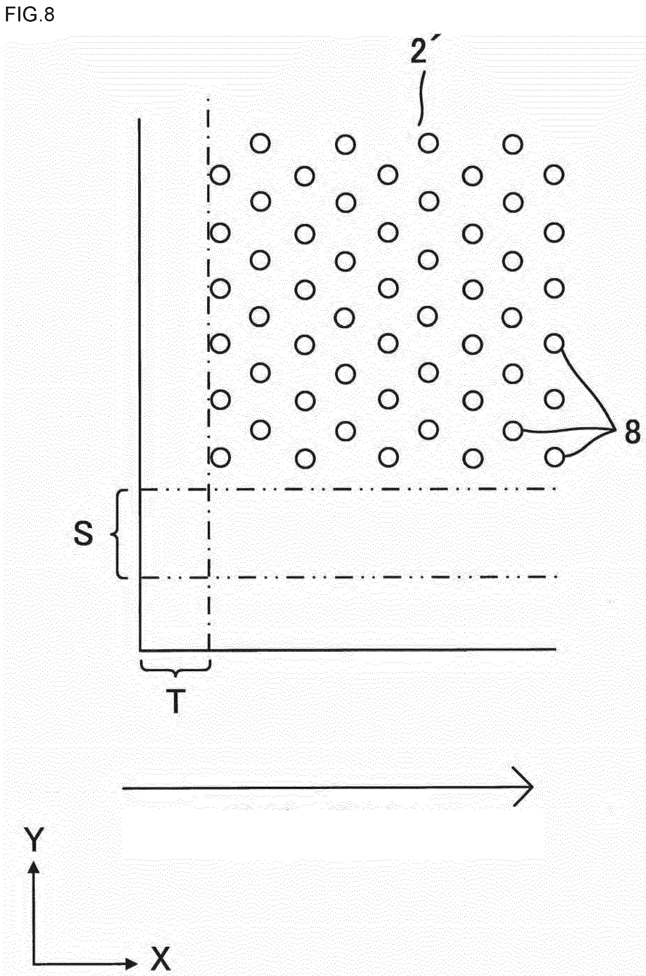

Here, to prevent early fatigue failure of the beam-shaped flat portion 2a, a measure of "avoiding perforating processing on the foil portion corresponding to the beam-shaped flat portion 2a (the Y-axis direction end portion S)" is also conceivable. For example, as shown in Figure 8, there is a measure in which the perforating processing is not performed on the outer edge of the flat foil 2' including the foil portion corresponding to the beam-shaped flat portion 2a (the Y-axis direction end portion S). However, in these cases, each honeycomb body requires preparation of one flat foil with holes made through perforating processing in the foil portion excluding the Y-axis direction end portion S. This makes it impossible to continuously manufacture the honeycomb body, resulting in complicated manufacturing. In view of this point, the present invention provides a substrate for carrying catalyst capable of preventing early fatigue failure of beam-shaped flat portion while avoiding the complication in continuously manufacturing honeycomb bodies, and provides a catalyst carrier carrying catalyst on the substrate.

The foil thickness of the metal foil is preferably 20 µm or more and 100 µm or less, more preferably 20 µm or more and 70 µm or less, and even more preferably 20 µm or more and 50 µm or less. Such a metal foil with a thin foil thickness makes it possible to increase the rate of temperature rise of the honeycomb body 4 in exhaust gas purification, thereby activating the catalyst and reducing the weight of the catalyst carrier 1. However, excessively thin foil thickness of the metal foil naturally decreases the strength and causes the fatigue failure mentioned in the "Technical Problem" section to be likely to occur.

The foil width of the metal foil is preferably 10 mm or more and 500 mm or less. The size of the metal foil can be appropriately changed according to the use of the catalyst carrier **1.** The corrugated foil 3 can be manufactured through corrugating processing on a metal foil, for example.

A metal foil made of a heat-resistant alloy can be used for the flat foil 2 and the corrugated foil **3.** The heat-resistant alloy used for the metal foil can be ferritic stainless steel consisting of Cr: 20% by mass, Al: 5% by mass, and the balance being Fe and unavoidable impurities (in other words, Fe-20Cr-5Al alloy). Further, the heat-resistant alloy can also be ferritic stainless steel joined with a Ni-based brazing material having high heat resistance. However, the heat-resistant alloy applicable to the present invention is not limited to the above-mentioned ferritic stainless steel, and can be various kinds of heat-resistant stainless steel containing Al in the alloy composition. In other words, the metal foil used for the honeycomb body 4 typically contains 15 to 25% by mass of Cr and 2 to 8% by mass of Al, and, in addition to the above, Fe-18Cr-3Al alloy, Fe-20Cr-8 Al alloy, or the like can also be used as heat-resistant alloy.

The catalyst can be carried on the metal foil by applying a predetermined washcoat liquid to the surface of the metal foil of the honeycomb body 4 and drying and calcining it. The washcoat liquid to be used can be, for example, a slurry liquid obtained by stirring γ-alumina powder, lanthanum oxide, zirconium oxide, and cerium oxide in an aqueous solution of palladium nitrate.

The outer mantle 5 to be used can be ferritic stainless steel containing about 13 to 20% by mass of Cr, such as SUS436L or SUS430. The wall thickness of the outer mantle 5 is preferably 0.5 mm or more and 3 mm or less. The cell density of the honeycomb body 4 is preferably 15.5 to 93 cells per square centimeter (100 to 600 cells per square inch).

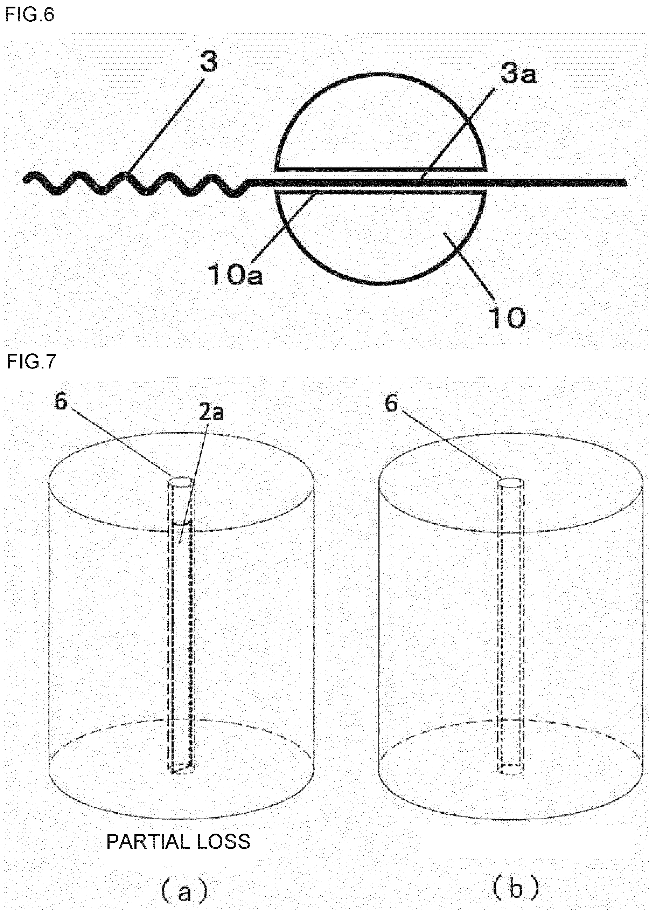

The diameter of the winding core portion 6 is 3 mm or less, preferably 2.5 mm or less, and more preferably 2 mm or less. Designing the winding core portion 6 to have a small diameter (3 mm or less) allows the length of the beam-shaped flat portion 2a (the length of the winding core portion 6 in the radial direction) to be restricted to 3 mm or less. Setting the diameter of the winding core portion 6 to over 3 mm causes the beam-shaped flat portion 2a to undergo early fatigue failure, to cause the beam-shaped flat portion 2a to be lost throughout the axial direction (full length loss) as shown in Figure 7(b). Contrarily, restricting the diameter of the winding core portion 6 to 3 mm or less causes the beam-shaped flat portion 2a to be less likely to vibrate due to the pulsation of the exhaust gas. This can prevent early fatigue failure of the beam-shaped flat portion 2a, resulting in the beam-shaped flat portion 2a rarely having a loss or partially having a loss (partial loss) only at one end side (gas inlet side) of the beam-shaped flat portion 2a as shown in Figure 7(a). Restricting the diameter of the winding core portion 6 to 2.5 mm or less can further prevent the beam-shaped flat portion 2a from early fatigue failure, to further reduce the likelihood in which a partial loss occurs. Restricting the diameter of the winding core portion 6 to 2 mm or less can still further prevent early fatigue failure of the beam-shaped flat portion 2a, to still further reduce the likelihood in which a partial loss occurs.

Here, the present inventors further investigated parameters for preventing early fatigue failure of the beam-shaped flat portion 2a. As a result, the present inventors have found that there are the following factors affecting the fatigue failure of the beam-shaped flat portion 2a, as well as (1) the inner diameter of the winding core portion 6 described above: (2) the diameter of each hole 8; (3) the aperture ratio of the holes 8 in the beam-shaped flat portion 2a; and (4) foil thickness of metal foil (the flat foil 2 and the corrugated foil 3). Reducing the diameter of the holes 8 causes the holes 8 to be arranged in a manner in which they are finely and uniformly dispersed in the beam-shaped flat portion 2a, resulting in more uniform stress applied to the beam-shaped flat portion 2a. This can prevent the generation and propagation of cracks, thereby preventing early fatigue failure of the beam-shaped flat portion 2a. Reducing the aperture ratio of the holes 8 in the beam-shaped flat portion 2a can increase the occupation ratio of the metal foil in the beam-shaped flat portion 2a. This allows the beam-shaped flat portion 2a to maintain the strength thereof higher, preventing early fatigue failure. Increasing the foil thickness of the metal foil (the flat foil 2 and the corrugated foil 3) increases the strength of the beam-shaped flat portion 2a, to enable preventing early fatigue failure.

In view of the above points, the present inventors have come up with the idea of formulating a prediction formula that contributes to preventing fatigue failure of the beam-shaped flat portion 2a, using the parameters described in (1) to (4) above. The present inventors further have conducted intensive studies and have derived the following prediction formula. Note that, in the following prediction formula, R represents the diameter (mm) of the hole 8, U represents the aperture ratio (%) of the hole 8 in the beam-shaped flat portion 2a, V represents the inner diameter (mm) of the winding core portion 6, and W represents the foil thickness (µm) of the metal foil. $L = \left(R+3\right) \times U \times \left(V-1\right) \times 50 / \left(W+\left|50-W\right|\times 0.5\right)$ (where: 0.5 ≤ R ≤ 6, 20 ≤ U ≤ 60, 1 ≤ V ≤ 3, 20 ≤ W ≤ 100)

By setting the value L of the prediction formula to a predetermined threshold value or less, the diameter of the hole 8, the aperture ratio of the hole 8 in the beam-shaped flat portion 2a, the inner diameter of the winding core portion 6, and the foil thickness of the metal foil can be set to prevent early fatigue failure of the beam-shaped flat portion 2a in manufacturing the honeycomb body 4. In other words, it is possible to design in advance the honeycomb body 4 in which the beam-shaped flat portion 2a is less likely to undergo fatigue failure.

Preferably, the threshold value is determined to be 900 and the above parameters (1) to (4) are set so that the value L of the prediction formula is 900 or less. This can further prevent the beam-shaped flat portion 2a from early fatigue failure and can further reduce the likelihood in which partial loss occurs.

More preferably, the threshold value is determined to be 700 and the parameters (1) to (4) above are set so that the value L of the prediction formula is 700 or less. This can still further prevent the beam-shaped flat portion 2a from early fatigue failure and can still further reduce the likelihood in which partial loss occurs.

Still more preferably, the threshold value is determined to be 500 and the parameters (1) to (4) above are set so that the value of the prediction formula L is 500 or less. This can yet still further prevent the beam-shaped flat portion 2a from early fatigue failure, and can yet still further reduce the likelihood in which partial loss occurs.

Most preferably, the threshold value is determined to be 300 and the parameters (1) to (4) above are set so that the value of the prediction formula L is 300 or less. This can yet still further prevent the beam-shaped flat portion 2a from early fatigue failure, and can yet still further reduce the likelihood in which partial loss occurs.

These points will be shown in Examples below.

If the beam-shaped flat portion 2a is destroyed, the hydraulic diameter of the winding core portion 6 increases to increase the amount of exhaust gas flowing into the opening of the winding core portion 6, resulting in decrease in the purification performance of the catalyst carrier 1. The configuration of the present embodiment allows the beam-shaped flat portion 2a to be prevented from early fatigue failure, preventing deterioration of the purification performance due to the diameter expansion of the winding core portion 6 over a long period of time. Note that the lower limit of the diameter of the winding core portion 6 is not particularly limited, but is preferably 1 mm.

The catalyst carrier 1 of this embodiment can be suitably used as a catalytic converter for a single-cylinder engine. In the case of a four-stroke engine, in cycle steps of intake → compression → combustion → exhaust, the step in which exhaust gas flows out to the exhaust pipe is only the exhaust step. In a multi-cylinder engine, the timing of the exhaust step of each cylinder is different, resulting in reduced pulsation. Contrarily, in the case of a single-cylinder engine, the exhaust timing is only one of the four steps, so that the pulsation of the exhaust gas is relatively large. For the reasons described above, the catalyst carrier 1 of this embodiment can be suitably used for purifying the exhaust gas of a single-cylinder engine. However, since pulsation occurs even in a multi-cylinder engine, the catalyst carrier 1 of this embodiment can also be applied to a multi-cylinder engine.

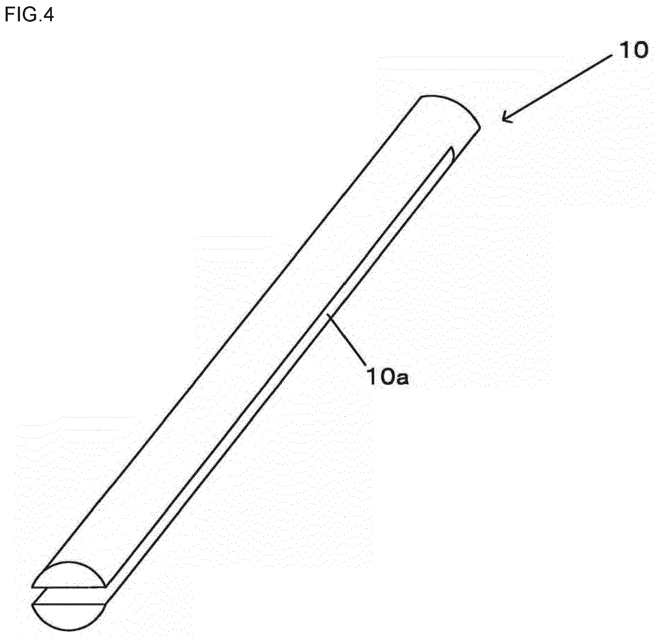

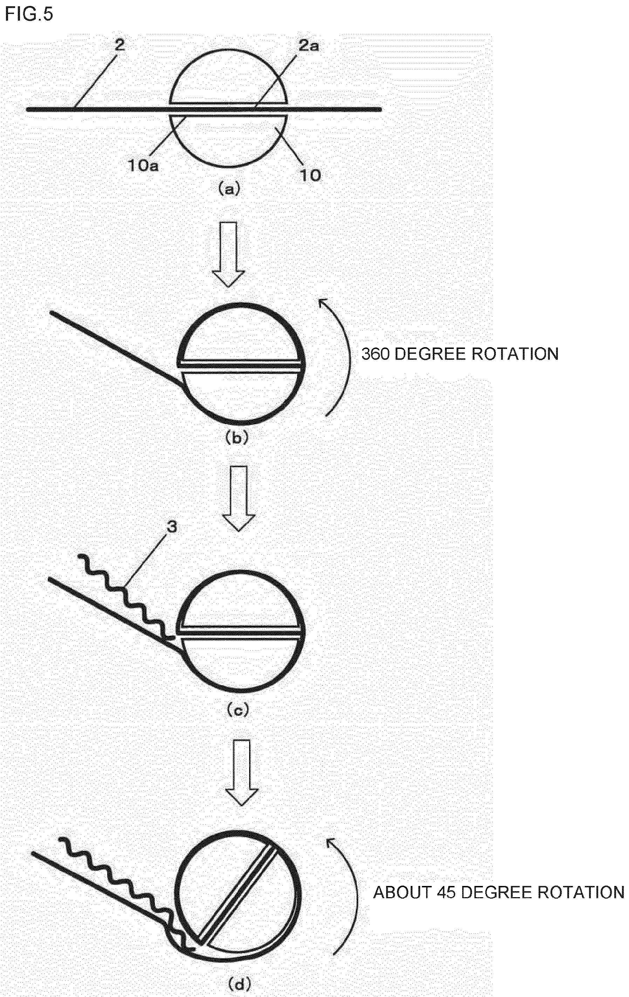

Next, a method of manufacturing a substrate for carrying catalyst will be described with reference to Figures 4 and 5. Figure 4 is a perspective view of a winding shaft 10 used in winding the flat foil 2 and the corrugated foil 3. Figure 5 is a process diagram showing a process of manufacturing the substrate for carrying catalyst (however, only the initial process). The winding shaft 10 is formed in the shape of a round bar (circular shape as viewed in the axial direction), and has one end portion, in the longitudinal direction, formed with a long slit 10a extending toward the other end side.

First, the end portion of the flat foil 2 in the longitudinal direction of the flat foil 2 is slid into the slit 10a of the winding shaft 10 and thereby the flat foil 2 is clamped in the radial direction of the winding shaft 10 (see Figure 5(a)). Note that, to fix the flat foil 2, it is desirable that the end of the flat foil 2 protrudes slightly from the winding shaft 10. The portion of the flat foil 2 clamped in the slit 10a (the Y-axis direction end portion S in Figure 2) becomes the beam-shaped flat portion 2a extending into the winding core portion 6 of the honeycomb body 4. The winding shaft 10 is rotated by one turn around its longitudinal axis while an appropriate tension is applied to the flat foil 2, and thereby the flat foil 2 is wound around the winding shaft 10 by about one turn (see Figure 5(b)). However, the flat foil 2 may be wound by more than one turn by rotating the winding shaft 10 by more than one turn. Next, the corrugated foil 3 is slid between the winding shaft 10 and the flat foil 2 (see Figure 5(c)). The winding shaft 10 is further rotated around the longitudinal axis, and when the honeycomb body 4 reaches a predetermined diameter, the winding operation with the winding shaft 10 is stopped and the winding shaft 10 is pulled out from the honeycomb body **4.**

Figure 5(d) shows a state in which the winding shaft 10 is rotated about 45 degrees from the state illustrated in Figure 5(c). In this embodiment, setting the diameter of the winding shaft 10 to about 3 mm or less adjusts the inner diameter of the winding core portion 6 to 3 mm or less.

The honeycomb body 4 is inserted into the outer mantle 5 and is fixed to the outer mantle 5 by joining with a brazing material or the like, or by caulking, obtaining a substrate for carrying catalyst. After that, the catalyst is carried on the honeycomb body **4,** obtaining the catalyst carrier **1.** Since regarding the catalyst, it has been described above, the description will not be repeated.

### (Modification)

In the embodiment described above, the end portion of the flat foil 2 (the Y-axis direction end portion S) is made into a beam-shaped flat portion, but the present invention is not limited to this, and the end portion of the corrugated foil 3 may be made into a beam-shaped flat portion. Figure 6 corresponds to (a) of the process diagram shown in Figure **5****.** With reference to the figure, a flat portion having no unevenness is formed at the end of the corrugated foil **3,** and this portion can be made into the beam-shaped flat portion **3a.** The beam-shaped flat portion 3a of the corrugated foil 3 is clamped in the slit 10a of the winding shaft 10 and wound with the flat foil 2, and thereby a catalyst carrier can be manufactured in which the beam-shaped flat portion 3a of the corrugated foil 3 extends into the winding core portion 6. The details of the manufacturing process are substantially the same as those of the above-described embodiment, so description thereof will be omitted.

### (Example)

The present invention will be described in detail by showing examples.

### <Examples 1 to 5, Comparative Examples 1 to 3>

First, two flat foils made of ferritic stainless steel foils (Fe-20Cr-5Al alloy) having a thickness of 50 µm and a width of 100 mm was formed with circular holes having a predetermined diameter (corresponding to the holes 8 in the above embodiment) with a predetermined aperture ratio. At this time, the holes were formed at positions avoiding the gas inlet side end portion (corresponding to the gas inlet side end portion T in the above-described embodiment). Note that the definition of the aperture ratio has been described above, so the explanation will be omitted. In the present example, the hole diameter was 0.5 mm, the aperture ratio was 40%, and the holes were arranged in a zigzag pattern as shown in Figure 2. The longitudinal pitch of the holes was set to 0.652 mm, and the transverse pitch thereof was set to 0.753 mm.

Next, according to the process diagram shown in Figure 5, a honeycomb body was manufactured by winding one flat foil (corresponding to the flat foil 2 in the above-described embodiment) and a corrugated foil formed by processing the other flat foil into a corrugated shape (corresponding to the corrugated foil 3 in the above-described embodiment 3). Therefore, the manufactured honeycomb body had a configuration in which holes were also formed in the beam-shaped flat portion. The diameter of the winding shaft (which can be translated as "inner diameter of the winding core portion" or "length of the beam-shaped flat portion") was set to any one of 6 mm, 5 mm, 4 mm, 3 mm, 2.5 mm, 2 mm, 1.5 mm, or 1 **mm.** Outer mantles were prepared each of which had an outer diameter of 80 mm, a thickness of 1.5 mm, a length of 100 mm. Then, honeycomb bodies were respectively inserted into the outer mantles, and thereby substrates for carrying catalyst, which were to be the base materials of the catalyst carrier, were manufactured. The ferritic stainless steel (SUS436L) was used for the outer mantles. The cell density of each honeycomb body was determined to be 62 cells per square centimeter (400 cells per square inch). Each of the flat foil and the corrugated foil forming the honeycomb body were joined together by brazing. Each honeycomb body and the outer mantle were also joined by brazing.

50 samples for each are prepared, and the samples underwent heating/cooling cycle tests with an engine bench, thereby evaluating the structural durability. Each substrate for carrying catalyst was set in a test apparatus to be checked whether the beam-shaped flat portion broke.

The test apparatus and the substrate for carrying catalyst were connected via a cone. Welding was used for the connection method. The used engine was a single-cylinder gasoline engine with a displacement of 400 cc.

The selected pattern of the cooling/heating cycle was such a temperature pattern that the inlet side temperature of the gas flowing into the substrate for carrying catalyst was varied between 900°C and 100°C or lower. In other words, one cycle was determined to be a cooling/heating cycle consisting of: a temperature raising step in which the incoming gas temperature reached 900°C in about 30 seconds and a retaining step to retain the reached temperature (900°C) by rotating the engine for 5 minutes from the engine stopped state; and a cooling step in which the engine was stopped and room temperature air was sent for 5 minutes, thereby cooling the incoming gas to 100°C in approximately 60 seconds, and then the room temperature air was flowed continuously.

After this cooling/heating cycle was repeated for 1000 cycles, each substrate for carrying catalyst was observed to be checked for the state of breakage of the beam-shaped flat portion disposed in the winding core portion. As shown in Figure 7(b), when the beam-shaped flat portion 2a was lost throughout the axial direction, evaluated as "full length loss". As shown in FIG. 7(a), when only one end side (gas inlet side) of the beam-shaped flat portion 2a was partially damaged, evaluated as "partial loss". Table 1 shows the evaluation results. Note that the "gas inlet side end portion" in the table is represented by the axial length starting from the gas inlet side edge of the honeycomb body.

Breakage to the beam-shaped flat portion was evaluated by the ratio of the number of samples with full length loss (or partial loss) to the number of samples (50) tested at each test level. The breakage rate of 96% or more is evaluated to be 100%, the rate of 86% to 94% to be 90%, the rate of 76% to 84% to be 80%, the rate of 66% to 74% to be 70%, the rate of 56% to 64% to be 60%, the rate of 46% to 54% to be 50%, the rate of 36% to 44% to be 40%, the rate of 26% to 34% to be 30%, the rate of 16% to 24% to be 20%, the rate of 6% to 14% to be 10%, the rate of 4% or less to be 0%.

Note that, "L" shown in Table 1 is a value L calculated with the above-mentioned prediction formula (L = (R + 3) × U × (V - 1) × 50/(W + |50 - W| × 0.5)) under each condition (where: 0.5 ≤ R ≤ 6, 20 ≤U ≤60, 1 ≤ V ≤ 3, 20 ≤ W ≤ 100), and the same applies to the tables from Table 2 onward.

**[Table 1]**

| | H oneycom b diameter | H oneycom b bngth | Outer m ante diameter | Outer m ante length | Foil thickness | Cell density | Hob diameter | Aperture ratb | Gas inletside end portbn | Winding core diameter | Beam breakage | | L |
|---|---|---|---|---|---|---|---|---|---|---|---|---|---|
| | mm | mm | mm | mm | *µ*m | cpsi | mm | % | mm | mm | Full length bss | Partalbss | |
| Comparative Example 1 | 77 | 100 | 80 | 100 | 50 | 400 | 0.5 | 40% | 5 | 6 | 100% | | |
| Comparative Example 2 | 77 | 100 | 80 | 100 | 50 | 400 | 0.5 | 40% | 5 | 5 | 100% | | |
| Comparative Example 3 | 77 | 100 | 80 | 100 | 50 | 400 | 0.5 | 40% | 5 | 4 | 100% | | |
| Example 1 | 77 | 100 | 80 | 100 | 50 | 400 | 0.5 | 40% | 5 | 3 | 0% | 0% | 280 |
| Example 2 | 77 | 100 | 80 | 100 | 50 | 400 | 0.5 | 40% | 5 | 2.5 | 0% | 0% | 210 |
| Example 3 | 77 | 100 | 80 | 100 | 50 | 400 | 0.5 | 40% | 5 | 2 | 0% | 0% | 140 |
| Example 4 | 77 | 100 | 80 | 100 | 50 | 400 | 0.5 | 40% | 5 | 1.5 | 0% | 0% | 70 |
| Example 5 | 77 | 100 | 80 | 100 | 50 | 400 | 0.5 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 1 to 3). Contrarily, when the winding core diameters were set to 3 mm, 2.5 mm, 2 mm, 1.5 mm, and 1 mm, "full length loss" and "partial loss" were rarely confirmed, and all the evaluations were "0%". (Examples 1 to 5).

The above test results show that setting the winding core diameter to 3 mm or less greatly improves the effect of preventing loss of the beam-shaped flat portion even if the holes with a hole diameter of 0.5 mm are formed in the beam-shaped flat portion.

### <Examples 6 to 10, Comparative Examples 4 to 6>

The substrates for carrying catalyst were respectively prepared by changing the hole diameters to 1 mm compared to Examples 1 to 5 and Comparative Examples 1 to 3, and the structural durability of them was evaluated. The explanation of the evaluation method will not be repeated. Table 2 shows the evaluation results. Note that the longitudinal pitch of the holes was set to 1.304 mm, and the transverse pitch thereof was set to 1.506 mm.

**[Table 2]**

| | H oneycom b diameter | H oneycom b bngth | Outer m ante diameter | Outer m ante length | Foil thickness | Cell density | Hob diameter | Aperture ratb | Gas inletside end portbn | Winding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partial bss | |
| Comparative Example 4 | 77 | 100 | 80 | 100 | 50 | 400 | 1 | 40% | 5 | 6 | 100% | | |
| Comparative Example 5 | 77 | 100 | 80 | 100 | 50 | 400 | 1 | 40% | 5 | 5 | 100% | | |
| Comparative Example 6 | 77 | 100 | 80 | 100 | 50 | 400 | 1 | 40% | 5 | 4 | 100% | | |
| Example 6 | 77 | 100 | 80 | 100 | 50 | 400 | 1 | 40% | 5 | 3 | 0% | 10% | 320 |
| Example 7 | 77 | 100 | 80 | 100 | 50 | 400 | 1 | 40% | 5 | 2.5 | 0% | 0% | 240 |
| Example 8 | 77 | 100 | 80 | 100 | 50 | 400 | 1 | 40% | 5 | 2 | 0% | 0% | 160 |
| Example 9 | 77 | 100 | 80 | 100 | 50 | 400 | 1 | 40% | 5 | 1.5 | 0% | 0% | 80 |
| Example 10 | 77 | 100 | 80 | 100 | 50 | 400 | 1 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 4 to 6). Contrarily, when the winding core diameter was set to 3 mm, no samples with "full length loss" were confirmed (evaluation: "0%"), and "partial loss" was confirmed in only about 10% (Example 6). When the winding core diameters were set to 2.5 mm, 2 mm, 1.5 mm, and 1 mm, not only "full length loss" but also "partial loss" were rarely confirmed, and the evaluations were "0%" for both. (Examples 7 to 10).

The above test results show that setting the winding core diameter to 3 mm or less greatly improves the effect of preventing loss of the beam-shaped flat portion even if the holes with a hole diameter of 1 mm are formed in the beam-shaped flat portion.

### <Examples 11 to 15, Comparative Examples 7 to 9>

The substrates for carrying catalyst were respectively prepared by changing the hole diameters to 2 mm compared to Examples 1 to 5 and Comparative Examples 1 to 3, and the structural durability of them was evaluated. The explanation of the evaluation method will not be repeated. Table 3 shows the evaluation results.

Note that the longitudinal pitch of the holes was set to 2.608 mm, and the transverse pitch thereof was set to 3.011 mm.

**[Table 3]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partalbss | |
| Comparative Example 7 | 77 | 100 | 80 | 100 | 50 | 400 | 2 | 40% | 5 | 6 | 100% | | |
| Comparative Example 8 | 77 | 100 | 80 | 100 | 50 | 400 | 2 | 40% | 5 | 5 | 100% | | |
| Comparative Example 9 | 77 | 100 | 80 | 100 | 50 | 400 | 2 | 40% | 5 | 4 | 100% | | |
| Example 11 | 77 | 100 | 80 | 100 | 50 | 400 | 2 | 40% | 5 | 3 | 0% | 10% | 400 |
| Example 12 | 77 | 100 | 80 | 100 | 50 | 400 | 2 | 40% | 5 | 2.5 | 0% | 0% | 300 |
| Example 13 | 77 | 100 | 80 | 100 | 50 | 400 | 2 | 40% | 5 | 2 | 0% | 0% | 200 |
| Example 14 | 77 | 100 | 80 | 100 | 50 | 400 | 2 | 40% | 5 | 1.5 | 0% | 0% | 100 |
| Example 15 | 77 | 100 | 80 | 100 | 50 | 400 | 2 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 7 to 9). Contrarily, when the winding core diameter was set to 3 mm, no samples with "full length loss" were confirmed (evaluation: "0%"), and "partial loss" was confirmed in only about 10% (Example 11). When the winding core diameters were set to 2.5 mm, 2 mm, 1.5 mm, and 1 mm, not only "full length loss" but also "partial loss" were rarely confirmed, and the evaluations were "0%" for both. (Examples 12 to 15).

The above test results show that setting the winding core diameter to 3 mm or less greatly improves the effect of preventing loss of the beam-shaped flat portion even if the holes with a hole diameter of 2 mm are formed in the beam-shaped flat portion.

### <Examples 16 to 20, Comparative Examples 10 to 12>

The substrates for carrying catalyst were respectively prepared by changing the hole diameters to 3 mm compared to Examples 1 to 5 and Comparative Examples 1 to 3, and the structural durability of them was evaluated. The explanation of the evaluation method will not be repeated. Table 4 shows the evaluation results. Note that the longitudinal pitch of the holes was set to 3.912 mm, and the transverse pitch thereof was set to 4.517 mm.

**[Table 4]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partial bss | |
| Comparative Example 10 | 77 | 100 | 80 | 100 | 50 | 400 | 3 | 40% | 5 | 6 | 100% | | |
| Comparative Example 11 | 77 | 100 | 80 | 100 | 50 | 400 | 3 | 40% | 5 | 5 | 100% | | |
| Comparative Example 12 | 77 | 100 | 80 | 100 | 50 | 400 | 3 | 40% | 5 | 4 | 100% | | |
| Example 16 | 77 | 100 | 80 | 100 | 50 | 400 | 3 | 40% | 5 | 3 | 0% | 10% | 480 |
| Example 17 | 77 | 100 | 80 | 100 | 50 | 400 | 3 | 40% | 5 | 2.5 | 0% | 10% | 360 |
| Example 18 | 77 | 100 | 80 | 100 | 50 | 400 | 3 | 40% | 5 | 2 | 0% | 0% | 240 |
| Example 19 | 77 | 100 | 80 | 100 | 50 | 400 | 3 | 40% | 5 | 1.5 | 0% | 0% | 120 |
| Example 20 | 77 | 100 | 80 | 100 | 50 | 400 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 10 to 12). Contrarily, when the winding core diameters were set to 3 mm and 2.5 mm, no samples with "full length loss" were confirmed (evaluation: "0%"), and "partial loss" was confirmed in only about 10% (Examples 16 to 17). When the winding core diameters were set to 2 mm, 1.5 mm, and 1 mm, not only "full length loss" but also "partial loss" were rarely confirmed, and the evaluations were "0%" for both. (Examples 18 to 20).

The above test results show that setting the winding core diameter to 3 mm or less greatly improves the effect of preventing loss of the beam-shaped flat portion even if the holes with a hole diameter of 3 mm are formed in the beam-shaped flat portion.

### <Examples 21 to 25, Comparative Examples 13 to 15>

The substrates for carrying catalyst were respectively prepared by changing the hole diameters to 4 mm compared to Examples 1 to 5 and Comparative Examples 1 to 3, and the structural durability of them was evaluated. The explanation of the evaluation method will not be repeated. Table 5 shows the evaluation results. Note that the longitudinal pitch of the holes was set to 5.216 mm, and the transverse pitch thereof was set to 6.023 mm.

**[Table 5]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partial bss | |
| Comparative Example 13 | 77 | 100 | 80 | 100 | 50 | 400 | 4 | 40% | 5 | 6 | 100% | | |
| Comparative Example 14 | 77 | 100 | 80 | 100 | 50 | 400 | 4 | 40% | 5 | 5 | 100% | | |
| Comparative Example 15 | 77 | 100 | 80 | 100 | 50 | 400 | 4 | 40% | 5 | 4 | 100% | | |
| Example 21 | 77 | 100 | 80 | 100 | 50 | 400 | 4 | 40% | 5 | 3 | 0% | 20% | 560 |
| Example 22 | 77 | 100 | 80 | 100 | 50 | 400 | 4 | 40% | 5 | 2.5 | 0% | 10% | 420 |
| Example 23 | 77 | 100 | 80 | 100 | 50 | 400 | 4 | 40% | 5 | 2 | 0% | 0% | 280 |
| Example 24 | 77 | 100 | 80 | 100 | 50 | 400 | 4 | 40% | 5 | 1.5 | 0% | 0% | 140 |
| Example 25 | 77 | 100 | 80 | 100 | 50 | 400 | 4 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 13 to 15). Contrarily, when the winding core diameter was set to 3 mm, no samples with "full length loss" were confirmed, and "partial loss" was confirmed in only about 20% (Example 21). When the winding core diameter was set to 2.5 mm, no samples with "full length loss" were confirmed, and "partial loss" was confirmed in only about 10% (Example 22). When the winding core diameters were set to 2 mm, 1.5 mm, and 1 mm, not only "full length loss" but also "partial loss" were rarely confirmed, and the evaluations were "0%" for both. (Examples 23 to 25).

The above test results show that setting the winding core diameter to 3 mm or less greatly improves the effect of preventing loss of the beam-shaped flat portion even if the holes with a hole diameter of 4 mm are formed in the beam-shaped flat portion.

### <Examples 26 to 30, Comparative Examples 16 to 18>

The substrates for carrying catalyst were respectively prepared by changing the hole diameters to 6 mm compared to Examples 1 to 5 and Comparative Examples 1 to 3, and the structural durability of them was evaluated. The explanation of the evaluation method will not be repeated. Table 6 shows the evaluation results. Note that the longitudinal pitch of the holes was set to 7.824 mm, and the transverse pitch thereof was set to 9.034 mm.

**[Table 6]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partalbss | |
| Comparative Example 16 | 77 | 100 | 80 | 100 | 50 | 400 | 6 | 40% | 5 | 6 | 100% | | |
| Comparative Example 17 | 77 | 100 | 80 | 100 | 50 | 400 | 6 | 40% | 5 | 5 | 100% | | |
| Comparative Example 18 | 77 | 100 | 80 | 100 | 50 | 400 | 6 | 40% | 5 | 4 | 100% | | |
| Example 26 | 77 | 100 | 80 | 100 | 50 | 400 | 6 | 40% | 5 | 3 | 0% | 30% | 720 |
| Example 27 | 77 | 100 | 80 | 100 | 50 | 400 | 6 | 40% | 5 | 2.5 | 0% | 20% | 540 |
| Example 28 | 77 | 100 | 80 | 100 | 50 | 400 | 6 | 40% | 5 | 2 | 0% | 10% | 360 |
| Example 29 | 77 | 100 | 80 | 100 | 50 | 400 | 6 | 40% | 5 | 1.5 | 0% | 0% | 180 |
| Example 30 | 77 | 100 | 80 | 100 | 50 | 400 | 6 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 16 to 18). Contrarily, when the winding core diameter was set to 3 mm, no samples with "full length loss" were confirmed (evaluation: "0%"), and "partial loss" was confirmed in only about 30% (Example 26). When the winding core diameter was set to 2.5 mm, no samples with "full length loss" were confirmed (evaluation: "0%"), and "partial loss" was confirmed in only about 20% (Example 27). When the winding core diameter was set to 2 mm, no samples with "full length loss" were confirmed (evaluation: "0%"), and "partial loss" was confirmed in only about 10% (Example 28). When the winding core diameters were set to 1.5 mm and 1 mm, not only "full length loss" but also "partial loss" were rarely confirmed, and the evaluations were "0%" for both. (Examples 29 to 30).

The above test results show that setting the winding core diameter to 3 mm or less greatly improves the effect of preventing loss of the beam-shaped flat portion even if the holes with a hole diameter of 6 mm are formed in the beam-shaped flat portion.

### <Examples 31 to 35, Comparative Examples 19 to 21>

The substrates for carrying catalyst were respectively prepared by changing the aperture ratios of the holes, formed in the flat foil and corrugated foil forming the honeycomb bodies, to 20% compared to Examples 16 to 20 and Comparative Examples 10 to 12, and the structural durability of them was evaluated. The explanation of the evaluation method will not be repeated. Table 7 shows the evaluation results. Note that the longitudinal pitch of the holes was set to 5.532 mm, and the transverse pitch thereof was set to 6.388 mm.

**[Table 7]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partalbss | |
| Comparative Example 19 | 77 | 100 | 80 | 100 | 50 | 400 | 3 | 20% | 5 | 6 | 100% | | |
| Comparative Example 20 | 77 | 100 | 80 | 100 | 50 | 400 | 3 | 20% | 5 | 5 | 100% | | |
| Comparative Example 21 | 77 | 100 | 80 | 100 | 50 | 400 | 3 | 20% | 5 | 4 | 100% | | |
| Example 31 | 77 | 100 | 80 | 100 | 50 | 400 | 3 | 20% | 5 | 3 | 0% | 0% | 240 |
| Example 32 | 77 | 100 | 80 | 100 | 50 | 400 | 3 | 20% | 5 | 2.5 | 0% | 0% | 180 |
| Example 33 | 77 | 100 | 80 | 100 | 50 | 400 | 3 | 20% | 5 | 2 | 0% | 0% | 120 |
| Example 34 | 77 | 100 | 80 | 100 | 50 | 400 | 3 | 20% | 5 | 1.5 | 0% | 0% | 60 |
| Example 35 | 77 | 100 | 80 | 100 | 50 | 400 | 3 | 20% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 19 to 21). Contrarily, when the winding core diameters were set to 3 mm, 2.5 mm, 2 mm, 1.5 mm, and 1 mm, not only "full length loss" but also "partial loss" were rarely confirmed, and the evaluations were "0%" for both. (Examples 31 to 35).

The above test results show that setting the winding core diameter to 3 mm or less greatly improves the effect of preventing loss of the beam-shaped flat portion even if the aperture ratio of the holes, formed in the flat foil and corrugated foil forming the honeycomb body, is set to 20%.

### <Examples 36 to 40, Comparative Examples 22 to 24>

The substrates for carrying catalyst were respectively prepared by changing the aperture ratios of the holes, formed in the flat foil and corrugated foil forming the honeycomb bodies, to 60% compared to Examples 16 to 20 and Comparative Examples 10 to 12, and the structural durability of them was evaluated. The explanation of the evaluation method will not be repeated. Table 8 shows the evaluation results. Note that the longitudinal pitch of the holes was set to 3.194 mm, and the transverse pitch thereof was set to 3.688 mm.

**[Table 8]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partial bss | |
| Comparative Example 22 | 77 | 100 | 80 | 100 | 50 | 400 | 3 | 60% | 5 | 6 | 100% | | |
| Comparative Example 23 | 77 | 100 | 80 | 100 | 50 | 400 | 3 | 60% | 5 | 5 | 100% | | |
| Comparative Example 24 | 77 | 100 | 80 | 100 | 50 | 400 | 3 | 60% | 5 | 4 | 100% | | |
| Example 36 | 77 | 100 | 80 | 100 | 50 | 400 | 3 | 60% | 5 | 3 | 0% | 30% | 720 |
| Example 37 | 77 | 100 | 80 | 100 | 50 | 400 | 3 | 60% | 5 | 2.5 | 0% | 20% | 540 |
| Example 38 | 77 | 100 | 80 | 100 | 50 | 400 | 3 | 60% | 5 | 2 | 0% | 10% | 360 |
| Example 39 | 77 | 100 | 80 | 100 | 50 | 400 | 3 | 60% | 5 | 1.5 | 0% | 0% | 180 |
| Example 40 | 77 | 100 | 80 | 100 | 50 | 400 | 3 | 60% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 22 to 24). Contrarily, when the winding core diameter was set to 3 mm, no samples with "full length loss" were confirmed (evaluation: "0%"), and "partial loss" was confirmed in only about 30% (Example 36). When the winding core diameter was set to 2.5 mm, no samples with "full length loss" were confirmed (evaluation: "0%"), and "partial loss" was confirmed in only about 20% (Example 37). When the winding core diameter was set to 2 mm, no samples with "full length loss" were confirmed (evaluation: "0%"), and "partial loss" was confirmed in only about 10% (Example 38). When the winding core diameters were set to 1.5 mm and 1 mm, not only "full length loss" but also "partial loss" were rarely confirmed, and the evaluations were "0%" for both. (Examples 39 to 40).

The above test results show that setting the winding core diameter to 3 mm or less greatly improves the effect of preventing loss of the beam-shaped flat portion even if the aperture ratio of the holes, formed in the flat foil and corrugated foil forming the honeycomb body, is set to 60%.

### <Examples 41 to 45, Comparative Examples 25 to 27>

The substrates for carrying catalyst were respectively prepared by shortening the lengths of the honeycomb bodies and the outer mantles to 40 mm compared to Examples 16 to 20 and Comparative Examples 10 to 12, and the structural durability of them was evaluated. The explanation of the evaluation method will not be repeated. Table 9 shows the evaluation results.

**[Table 9]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partalbss | |
| Comparative Example 25 | 77 | 40 | 80 | 40 | 50 | 400 | 3 | 40% | 5 | 6 | 100% | | |
| Comparative Example 26 | 77 | 40 | 80 | 40 | 50 | 400 | 3 | 40% | 5 | 5 | 100% | | |
| Comparative Example 27 | 77 | 40 | 80 | 40 | 50 | 400 | 3 | 40% | 5 | 4 | 100% | | |
| Example 41 | 77 | 40 | 80 | 40 | 50 | 400 | 3 | 40% | 5 | 3 | 0% | 10% | 480 |
| Example 42 | 77 | 40 | 80 | 40 | 50 | 400 | 3 | 40% | 5 | 2.5 | 0% | 10% | 360 |
| Example 43 | 77 | 40 | 80 | 40 | 50 | 400 | 3 | 40% | 5 | 2 | 0% | 0% | 240 |
| Example 44 | 77 | 40 | 80 | 40 | 50 | 400 | 3 | 40% | 5 | 1.5 | 0% | 0% | 120 |
| Example 45 | 77 | 40 | 80 | 40 | 50 | 400 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 25 to 27). Contrarily, when the winding core diameters were set to 3 mm and 2.5 mm, no samples with "full length loss" were confirmed (evaluation: "0%"), and "partial loss" was confirmed in only about 10% (Examples 41 to 42). When the winding core diameters were set to 2 mm, 1.5 mm, and 1 mm, not only "full length loss" but also "partial loss" were rarely confirmed, and the evaluations were "0%" for both. (Examples 43 to 45).

The above test results show that setting the winding core diameter to 3 mm or less greatly improves the effect of preventing loss of the beam-shaped flat portion even if the length of the honeycomb body and outer mantle is shortened to 40 mm.

### <Examples 46 to 55, Comparative Examples 28 to 33>

The substrates for carrying catalyst were respectively prepared by changing the diameters of the honeycomb bodies to 40 mm and 117 mm compared to Examples 16 to 20 and Comparative Examples 10 to 12, and the structural durability of them was evaluated. The explanation of the evaluation method will not be repeated. Tables 10 and 11 are the evaluation results.

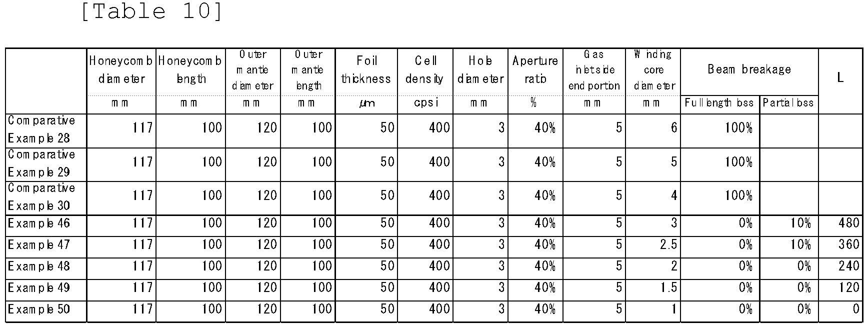

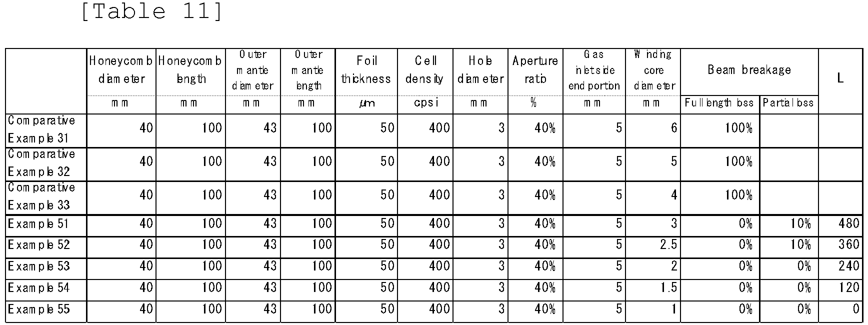

When the winding core diameters were set to 4 mm, 5 mm, and 6 mm, "full length loss" was confirmed in all the samples, so the evaluations of "full length loss" were "100%" (Comparative Examples 28 to 33). Contrarily, when the winding core diameters were set to 3 mm and 2.5 mm, no samples with "full length loss" were confirmed (evaluation: "0%"), and "partial loss" was confirmed in only about 10% (Examples 46 to 47 and Examples 51 to 52). When the winding core diameters were set to 2 mm, 1.5 mm, and 1 mm, not only "full length loss" but also "partial loss" were rarely confirmed, and the evaluations were "0%" for both (Examples 48 to 50 and Examples 53 to 55).

The above test results show that setting the winding core diameter to 3 mm or less greatly improves the effect of preventing loss of the beam-shaped flat portion even if the diameter of the honeycomb body is changed.

### <Examples 56 to 60, Comparative Examples 34 to 36>

The substrates for carrying catalyst were respectively prepared by changing the cell densities of the honeycomb bodies to 46.5 cells per square centimeter (300 cells per square inch) compared to Examples 16 to 20 and Comparative Examples 10 to 12, and the structural durability of them was evaluated. The explanation of the evaluation method will not be repeated. Table 12 shows the evaluation results.

**[Table 12]**

| | H oneycom b diameter | H oneycom b bngth | Outer m ante diameter | Outer m ante length | Foil thickness | Cell density | Hob diameter | Aperture ratb | Gas inletside end portbn | W inding core diameter | Beam breakage | | L |
|---|---|---|---|---|---|---|---|---|---|---|---|---|---|
| | mm | mm | mm | mm | *µ*m | cpsi | mm | % | mm | mm | Fu II length bss | Partalbss | |
| Comparative Example 34 | 77 | 100 | 80 | 100 | 50 | 300 | 3 | 40% | 5 | 6 | 100% | | |
| Comparative Example 35 | 77 | 100 | 80 | 100 | 50 | 300 | 3 | 40% | 5 | 5 | 100% | | |
| Comparative Example 36 | 77 | 100 | 80 | 100 | 50 | 300 | 3 | 40% | 5 | 4 | 100% | | |
| Example 56 | 77 | 100 | 80 | 100 | 50 | 300 | 3 | 40% | 5 | 3 | 0% | 10% | 480 |
| Example 57 | 77 | 100 | 80 | 100 | 50 | 300 | 3 | 40% | 5 | 2.5 | 0% | 10% | 360 |
| Example 58 | 77 | 100 | 80 | 100 | 50 | 300 | 3 | 40% | 5 | 2 | 0% | 0% | 240 |
| Example 59 | 77 | 100 | 80 | 100 | 50 | 300 | 3 | 40% | 5 | 1.5 | 0% | 0% | 120 |
| Example 60 | 77 | 100 | 80 | 100 | 50 | 300 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 34 to 36). Contrarily, when the winding core diameters were set to 3 mm and 2.5 mm, no samples with "full length loss" were confirmed (evaluation: "0%"), and "partial loss" was confirmed in only about 10% (Examples 56 to 57). When the winding core diameters were set to 2 mm, 1.5 mm, and 1 mm, not only "full length loss" but also "partial loss" were rarely confirmed, and the evaluations were "0%" for both. (Examples 58 to 60).

The above test results show that setting the winding core diameter to 3 mm or less greatly improves the effect of preventing loss of the beam-shaped flat portion even if the cell density of the honeycomb body is changed.

### <Examples 61 to 65, Comparative Examples 37 to 39>

The substrates for carrying catalyst were respectively prepared by changing the thickness of the foil, forming the honeycomb bodies, to 30 µm compared to Examples 16 to 20 and Comparative Examples 10 to 12, and the structural durability of them was evaluated. The explanation of the evaluation method will not be repeated. Table 13 shows the evaluation results.

**[Table 13]**

| | Honeycomb diameter | Honeycomb length | Outer mantle diameter | Outer mantle length | Foil thickness | Cell density | Hole diameter | Aperture ratio | Gas inletside end portbn | Winding core diameter | Beam breakage | | L |
|---|---|---|---|---|---|---|---|---|---|---|---|---|---|
| | mm | mm | mm | mm | *µ*m | cpsi | mm | % | mm | mm | Full length loss | Partial loss | |
| Comparative Example 37 | 77 | 100 | 80 | 100 | 30 | 400 | 3 | 40% | 5 | 6 | 100% | | |
| Comparative Example 38 | 77 | 100 | 80 | 100 | 30 | 400 | 3 | 40% | 5 | 5 | 100% | | |
| Comparative Example 39 | 77 | 100 | 80 | 100 | 30 | 400 | 3 | 40% | 5 | 4 | 100% | | |
| Example 61 | 77 | 100 | 80 | 100 | 30 | 400 | 3 | 40% | 5 | 3 | 0% | 20% | 600 |
| Example 62 | 77 | 100 | 80 | 100 | 30 | 400 | 3 | 40% | 5 | 2.5 | 0% | 10% | 450 |
| Example 63 | 77 | 100 | 80 | 100 | 30 | 400 | 3 | 40% | 5 | 2 | 0% | 0% | 300 |
| Example 64 | 77 | 100 | 80 | 100 | 30 | 400 | 3 | 40% | 5 | 1.5 | 0% | 0% | 150 |
| Example 65 | 77 | 100 | 80 | 100 | 30 | 400 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 37 to 39). Contrarily, when the winding core diameter was set to 3 mm, no samples with "full length loss" were confirmed (evaluation: "0%"), and "partial loss" was confirmed in only about 20% (Example 61). When the winding core diameter was set to 2.5 mm, no samples with "full length loss" were confirmed (evaluation: "0%"), and "partial loss" was confirmed in only about 10% (Example 62). When the winding core diameters were set to 2 mm, 1.5 mm, and 1 mm, not only "full length loss" but also "partial loss" were rarely confirmed, and the evaluations were "0%" for both. (Examples 63 to 65).

The above test results show that setting the winding core diameter to 3 mm or less greatly improves the effect of preventing loss of the beam-shaped flat portion even if the foil thickness of the honeycomb body is changed to 30 µm.

### <Examples 66 to 70, Comparative Examples 40 to 42>

The substrates for carrying catalyst were respectively prepared by changing the thickness of the foil, forming the honeycomb bodies, to 70 µm compared to Examples 16 to 20 and Comparative Examples 10 to 12, and the structural durability of them was evaluated. The explanation of the evaluation method will not be repeated. Table 14 shows the evaluation results.

**[Table 14]**

| | Honeycomb diameter | Honeycomb bngth | Outer mantle diameter | Outer mantle length | Foil thickness | Cell density | Hole diameter | Aperture ratio | Gas inletside end portion | Winding core diameter | Beam breakage | | L |
|---|---|---|---|---|---|---|---|---|---|---|---|---|---|
| | mm | mm | mm | mm | *µ*m | cpsi | mm | % | mm | mm | Full length loss | Partial loss | |
| Comparative Example 40 | 77 | 100 | 80 | 100 | 70 | 400 | 3 | 40% | 5 | 6 | 100% | | |
| Comparative Example 41 | 77 | 100 | 80 | 100 | 70 | 400 | 3 | 40% | 5 | 5 | 90% | 10% | |
| Comparative Example 42 | 77 | 100 | 80 | 100 | 70 | 400 | 3 | 40% | 5 | 4 | 80% | 20% | |
| Example 66 | 77 | 100 | 80 | 100 | 70 | 400 | 3 | 40% | 5 | 3 | 0% | 0% | 300 |
| Example 67 | 77 | 100 | 80 | 100 | 70 | 400 | 3 | 40% | 5 | 2.5 | 0% | 0% | 225 |
| Example 68 | 77 | 100 | 80 | 100 | 70 | 400 | 3 | 40% | 5 | 2 | 0% | 0% | 150 |
| Example 69 | 77 | 100 | 80 | 100 | 70 | 400 | 3 | 40% | 5 | 1.5 | 0% | 0% | 75 |
| Example 70 | 77 | 100 | 80 | 100 | 70 | 400 | 3 | 40% | 5 | 1 | 0% | 0% | 0 |

When the winding core diameter was set to 6 mm, "full length loss" was confirmed in all the samples, so the evaluation of "full length loss" was "100%" (Comparative Example 40). When the winding core diameter was set to 5 mm, "full length loss" was confirmed in about 90% and "partial loss" was confirmed in about 10% (Comparative Example 41). When the winding core diameter was set to 4 mm, "full length loss" was confirmed in about 80% and "partial loss" was confirmed in about 20% (Comparative Example 42). Contrarily, when the winding core diameters were set to 3 mm, 2.5 mm, 2 mm, 1.5 mm, and 1 mm, not only "full length loss" but also "partial loss" were not confirmed, and the evaluations were "0%" for both. (Examples 66 to 70).

The above test results show that setting the winding core diameter to 3 mm or less greatly improves the effect of preventing loss of the beam-shaped flat portion even if the foil thickness of the honeycomb body is changed to 70 µm.

### <Examples 71 to 75, Comparative Examples 43 to 45>

The substrates for carrying catalyst were respectively prepared by changing the longitudinal pitches and the transverse pitches of the holes respectively to 3.641 mm and 4.854 mm compared to Examples 16 to 20 and Comparative Examples 10 to 12, and the structural durability of them was evaluated. The explanation of the evaluation method will not be repeated. Table 15 shows the evaluation results.

**[Table 15]**

| | Honeycomb diameter | Honeycomb length | Outer mantle diameter | Outer mantle length | Foil thickness | Cell density | Hole diameter | Aperture ratio | Gas inletside end portbn | Winding core diameter | Beam breakage | | L |
|---|---|---|---|---|---|---|---|---|---|---|---|---|---|
| | mm | mm | mm | mm | *µ*m | cpsi | mm | % | mm | mm | Full length loss | Partial loss | |
| Comparative Example 43 | 77 | 100 | 80 | 100 | 50 | 400 | 3 | 40% | 5 | 6 | 100% | | |
| Comparative Example 44 | 77 | 100 | 80 | 100 | 50 | 400 | 3 | 40% | 5 | 5 | 100% | | |
| Comparative Example 45 | 77 | 100 | 80 | 100 | 50 | 400 | 3 | 40% | 5 | 4 | 100% | | |
| Example 71 | 77 | 100 | 80 | 100 | 50 | 400 | 3 | 40% | 5 | 3 | 0% | 10% | 480 |
| Example 72 | 77 | 100 | 80 | 100 | 50 | 400 | 3 | 40% | 5 | 2.5 | 0% | 10% | 360 |
| Example 73 | 77 | 100 | 80 | 100 | 50 | 400 | 3 | 40% | 5 | 2 | 0% | 0% | 240 |
| Example 74 | 77 | 100 | 80 | 100 | 50 | 400 | 3 | 40% | 5 | 1.5 | 0% | 0% | 120 |
| Example 75 | 77 | 100 | 80 | 100 | 50 | 400 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 43 to 45). Contrarily, when the winding core diameters were set to 3 mm and 2.5 mm, no samples with "full length loss" were confirmed (evaluation: "0%"), and "partial loss" was confirmed in only about 10% (Examples 71 to 72). When the winding core diameters were set to 2 mm, 1.5 mm, and 1 mm, not only "full length loss" but also "partial loss" were rarely confirmed, and the evaluations were "0%" for both. (Examples 73 to 75).

The above test results show that setting the winding core diameter to 3 mm or less greatly improves the effect of preventing loss of the beam-shaped flat portion even if the longitudinal pitch and transverse pitch of the holes are respectively changed to 3.641 mm and 4.854 mm.

### <Examples 76 to 80, Comparative Examples 46 to 48>

The substrates for carrying catalyst were respectively prepared by changing the longitudinal pitches and the transverse pitches of the holes respectively to 4.204 mm and 4.204 mm compared to Examples 16 to 20 and Comparative Examples 10 to 12, and the structural durability of them was evaluated. The explanation of the evaluation method will not be repeated. Table 16 shows the evaluation results.

**[Table 16]**

| | Honeycomb diameter | Honeycomb bngth | Outer mantle diameter | Outer mantle length | Foil thickness | Cell density | Hole diameter | Aperture ratio | Gas inletside end portion | Winding core diameter | Beam breakage | | L |
|---|---|---|---|---|---|---|---|---|---|---|---|---|---|
| | mm | mm | mm | mm | *µ* m | cpsi | mm | % | mm | mm | Full length loss | Partial loss | |
| Comparative Example 46 | 77 | 100 | 80 | 100 | 50 | 400 | 3 | 40% | 5 | 6 | 100% | | |
| Comparative Example 47 | 77 | 100 | 80 | 100 | 50 | 400 | 3 | 40% | 5 | 5 | 100% | | |
| Comparative Example 48 | 77 | 100 | 80 | 100 | 50 | 400 | 3 | 40% | 5 | 4 | 100% | | |
| Example 76 | 77 | 100 | 80 | 100 | 50 | 400 | 3 | 40% | 5 | 3 | 0% | 10% | 480 |
| Example 77 | 77 | 100 | 80 | 100 | 50 | 400 | 3 | 40% | 5 | 2.5 | 0% | 10% | 360 |
| Example 78 | 77 | 100 | 80 | 100 | 50 | 400 | 3 | 40% | 5 | 2 | 0% | 0% | 240 |
| Example 79 | 77 | 100 | 80 | 100 | 50 | 400 | 3 | 40% | 5 | 1.5 | 0% | 0% | 120 |
| Example 80 | 77 | 100 | 80 | 100 | 50 | 400 | 3 | 40% | 5 | 1 | 0% | 0% | 0 |

When the winding core diameters were set to 4 mm, 5 mm, and 6 mm, "full length loss" was confirmed in all the samples, so the evaluations of "full length loss" were "100%" (Comparative Examples 46 to 48). Contrarily, when the winding core diameters were set to 3 mm and 2.5 mm, no samples with "full length loss" were confirmed (evaluation: "0%"), and "partial loss" was confirmed in only about 10% (Examples 76 to 77). When the winding core diameters were set to 2 mm, 1.5 mm, and 1 mm, not only "full length loss" but also "partial loss" were rarely confirmed, and the evaluations were "0%" for both. (Examples 78 to 80).

The above test results show that setting the winding core diameter to 3 mm or less greatly improves the effect of preventing loss of the beam-shaped flat portion even if the longitudinal pitch and transverse pitch of the holes are respectively changed to 4.204 mm and 4.204 mm.

In addition, with reference to Examples 1 to 80, it is found that the value of L of 900 or less can reduce the probability of partial loss to about 30% or less, the value of L of 700 or less can reduce the probability of partial loss to about 20% or less, the value of L of 500 or less can reduce the probability of partial loss to about 10% or less, and the value of L of 300 or less can reduce the probability of partial loss to almost zero.

### <Reference Examples 1 to 8>

In Reference Examples 1 to 8, substrates for carrying catalyst were manufactured in the same process as in Examples 1 to 5 and Comparative Examples 1 to 3 using a flat foil and a corrugated foil in which the holes were not formed, and the structural durability of them was evaluated. In other words, no holes were formed in the beam-shaped flat portions of the honeycomb bodies of Reference Examples 1 to 8. The conditions other than the presence or absence of holes in the flat foil and the corrugated foil were the same as those for the substrates for carrying catalyst of Examples 1 to 5 and Comparative Examples 1 to 3. The explanation of the evaluation method will not be repeated. Table 17 shows the evaluation results.

**[Table 17]**

| | Honeycomb diameter | Honeycomb length | Outer mantle diameter | Outer mantle length | Foil thickness | Cell density | Hole diameter | Aperture ratio | Gas inletside end portion | Winding core diameter | Beam breakage | |
|---|---|---|---|---|---|---|---|---|---|---|---|---|
| | mm | mm | mm | mm | *µ*m | cpsi | mm | % | mm | mm | Full length loss | Partial loss |
| Reference Example 1 | 77 | 100 | 80 | 100 | 50 | 400 | None | | | 6 | 0% | 10% |
| Reference Example 2 | 77 | 100 | 80 | 100 | 50 | 400 | None | | | 5 | 0% | 10% |
| Reference Example 3 | 77 | 100 | 80 | 100 | 50 | 400 | None | | | 4 | 0% | 10% |
| Reference Example 4 | 77 | 100 | 80 | 100 | 50 | 400 | None | | | 3 | 0% | 0% |
| Reference Example 5 | 77 | 100 | 80 | 100 | 50 | 400 | None | | | 2.5 | 0% | 0% |
| Reference Example 6 | 77 | 100 | 80 | 100 | 50 | 400 | None | | | 2 | 0% | 0% |
| Reference Example 7 | 77 | 100 | 80 | 100 | 50 | 400 | None | | | 1.5 | 0% | 0% |
| Reference Example 8 | 77 | 100 | 80 | 100 | 50 | 400 | None | | | 1 | 0% | 0% |

When the winding core diameters were 4 mm, 5 mm, and 6 mm, no samples with "full length loss" were confirmed (evaluation: "0%"), and "partial loss" was confirmed in only about 10% (Reference Examples 1 to 3). Contrarily, when the winding core diameters were set to 3 mm, 2.5 mm, 2 mm, 1.5 mm, and 1 mm, not only "full length loss" but also "partial loss" were not confirmed, and the evaluations were "0%" for both. (Reference Examples 4 to 8) .

As described above, according to the present invention, the inner diameter of the winding core portion 6 is formed to be small so that the length of the beam-shaped flat portion subjected to perforating processing is 3 mm or less, and thereby the beam-shaped flat portion is less likely to vibrate so that early fatigue failure can be prevented.

### Reference Signs List

1 metal carrier 2 flat foil 2a, 3a beam-shaped flat portion 3 corrugated foil
4 honeycomb body 5 outer mantle 6 winding core portion 8 hole 10 winding shaft

## Claims

1. A substrate for carrying catalyst comprising:
a honeycomb body (4) formed by winding a flat foil (2) and a corrugated foil (3) each made of a metal foil; and
an outer mantle (5) placed at a position surrounding an outer circumferential surface of the honeycomb body (4),
wherein a plurality of holes (8) are formed in the flat foil (2) and the corrugated foil (3),
a beam-shaped flat portion (2a) extends into a winding core portion (6) of the honeycomb body (4),
wherein part of the plurality of holes (8) are formed in the beam-shaped flat portion (2a),
wherein
the beam-shaped flat portion (2a) is an end portion of the flat foil (2) or an end portion of the corrugated foil (3), **characterized in that**
the winding core portion (6) has an inner diameter of 3 mm or less.

2. The substrate for carrying catalyst according to claim 1, wherein the winding core portion (6) has an inner diameter of 2.5 mm or less.

3. The substrate for carrying catalyst according to claim 1, wherein the winding core portion (6) has an inner diameter of 2 mm or less.

4. The substrate for carrying catalyst according to any one of claims 1 to 3, wherein:
R represents a diameter (mm) of each hole (8), U represents an aperture ratio (%) of the holes (8) in the beam-shaped flat portion (2a), V represents an inner diameter (mm) of the winding core portion (6), W represents a foil thickness (µm) of the metal foil (2,3), and L is formulated as $L = \left(R+3\right) \times U \times \left(V-1\right) \times 50 / \left(W+\left|50-W\right|\times 0.5\right)$
(where: 0.5 ≤ R ≤ 6, 20 ≤ U ≤ 60, 1 ≤ V ≤ 3, 20 ≤ W ≤ 100),
a value of L is equal to or less than a predetermined threshold value, and
the predetermined threshold value is 900.

5. The substrate for carrying catalyst according to claim 4, wherein the predetermined threshold value is 700.

6. The substrate for carrying catalyst according to claim 4, wherein the predetermined threshold value is 500.

7. The substrate for carrying catalyst according to claim 4, wherein the predetermined threshold value is 300.

8. The substrate for carrying catalyst according to any one of claims 1 to 7, wherein the metal foil has a foil thickness of 70 µm or less.

9. A catalyst carrier (1) comprising:
a honeycomb body (4) formed by winding a flat foil (2) and a corrugated foil (3) each made of a metal foil, the honeycomb body (4) carrying catalyst; and
an outer mantle (5) placed at a position surrounding an outer circumferential surface of the honeycomb body (4),
wherein a plurality of holes (8) are formed in the flat foil (2) and the corrugated foil (3),
a beam-shaped flat portion (2a) extends into a winding core portion (6) of the honeycomb body (4),
wherein part of the plurality of holes (8) are formed in the beam-shaped flat portion (2a),
wherein
the beam-shaped flat portion (2a) is an end portion of the flat foil (2) or an end portion of the corrugated foil (3), **characterized in that**
the winding core portion (6) has an inner diameter of 3 mm or less.

10. The catalyst carrier (1) according to claim 9,
wherein the catalyst carrier (1) is for purification of exhaust gas for a single-cylinder engine.

## Patentansprüche

1. Substrat zum Tragen eines Katalysators, das umfasst:
einen Wabenkörper (4), der durch Aufwickeln einer flachen Folie (2) und einer gewellten Folie (3) ausgebildet wird, die jeweils aus einer Metallfolie hergestellt sind; und
einen Außenmantel (5), der an einer Position platziert ist, die eine Außenumfangsoberfläche des Wabenkörpers (4) umgibt,
wobei in der flachen Folie (2) und der gewellten Folie (3) eine Mehrzahl von Löchern (8) ausgebildet ist,
sich ein balkenförmiger flacher Abschnitt (2a) in einen Wickelkernabschnitt (6) des Wabenkörpers (4) erstreckt,
wobei ein Teil der Mehrzahl von Löchern (8) in dem balkenförmigen flachen Abschnitt (2a) ausgebildet ist,
wobei der balkenförmige flache Abschnitt (2a) ein Endabschnitt der flachen Folie (2) oder ein Endabschnitt der gewellten Folie (3) ist, **dadurch gekennzeichnet, dass**
der Wickelkernabschnitt (6) einen Innendurchmesser von 3 mm oder weniger aufweist.

2. Substrat zum Tragen eines Katalysators nach Anspruch 1, wobei der Wickelkernabschnitt (6) einen Innendurchmesser von 2,5 mm oder weniger aufweist.

3. Substrat zum Tragen eines Katalysators nach Anspruch 1, wobei der Wickelkernabschnitt (6) einen Innendurchmesser von 2 mm oder weniger aufweist.

4. Substrat zum Tragen eines Katalysators nach Anspruch 1 bis 3, wobei:
R den Durchmesser (mm) jedes Lochs (8) bezeichnet, U ein Öffnungsverhältnis (%) der Löcher (8) in dem balkenförmigen flachen Abschnitt (2a) bezeichnet, V den Innendurchmesser (mm) des Wickelkernabschnitts (6) bezeichnet, W eine Foliendicke (µm) der Metallfolie (2, 3) bezeichnet und L wie folgt formuliert wird: $L = \left(R+3\right) \times U \times \left(V-1\right) \times 50 / \left(W+\left|50-W\right|\times 0,5\right)$
(wobei: 0,5 ≤ R ≤ 6, 20 ≤ U ≤ 60, 1 ≤ V ≤ 3, 20 ≤ W ≤ 100) ,
wobei ein Wert von L gleich oder kleiner als ein vorbestimmte Schwellenwert, und der vorbestimmte Schwellenwert 900 beträgt.

5. Substrat zum Tragen eines Katalysators nach Anspruch 4, wobei der vorbestimmte Schwellenwert 700 beträgt.

6. Substrat zum Tragen eines Katalysators nach Anspruch 4, wobei der vorbestimmte Schwellenwert 500 beträgt.

7. Substrat zum Tragen eines Katalysators nach Anspruch 4, wobei der vorbestimmte Schwellenwert 300 beträgt.

8. Substrat zum Tragen eines Katalysators nach einem der Ansprüche 1 bis 7, wobei die Metallfolie eine Foliendicke von 70 µm oder weniger aufweist.

9. Katalysatorträger (1), der umfasst:
einen Wabenkörper (4), der durch Aufwickeln einer flachen Folie (2) und einer gewellten Folie (3) ausgebildet wird, die jeweils aus einer Metallfolie, wobei der Wabenkörper (4) einen Katalysator trägt, hergestellt sind; und
einen Außenmantel (5), der an einer Position platziert ist, die eine Außenumfangsoberfläche des Wabenkörpers (4) umgibt,
wobei in der flachen Folie (2) und der gewellten Folie (3) eine Mehrzahl von Löchern (8) ausgebildet ist,
sich ein balkenförmiger flacher Abschnitt (2a) in einen Wickelkernabschnitt (6) des Wabenkörpers (4) erstreckt,
wobei ein Teil der Mehrzahl von Löchern (8) in dem balkenförmigen flachen Abschnitt (2a) ausgebildet ist,
wobei der balkenförmige flache Abschnitt (2a) ein Endabschnitt der flachen Folie (2) oder ein Endabschnitt der gewellten Folie (3) ist,
**dadurch gekennzeichnet, dass**
der Wickelkernabschnitt (6) einen Innendurchmesser von 3 mm oder weniger aufweist.

10. Katalysatorträger (1) nach Anspruch 9, wobei der Katalysatorträger (1) der Reinigung von Abgasen für einen Einzylindermotor dient.

## Revendications

1. Substrat destiné à porter un catalyseur, comprenant :
un corps en nid d'abeilles (4) formé par enroulement d'une feuille plate (2) et d'une feuille ondulée (3) constituées chacune d'une feuille métallique, et
une enveloppe extérieure (5) placée dans une position entourant une surface circonférentielle extérieure du corps en nid d'abeilles (4) ;
une pluralité de trous (8) étant formés dans la feuille plate (2) et la feuille ondulée (3),
une partie plate en forme de profilé (2a) s'étendant dans une partie centrale d'enroulement (6) du corps en nid d'abeilles (4),
une partie de la pluralité de trous (8) étant formés dans la partie plate en forme de profilé (2a),
la partie plate en forme de profilé (2a) consistant en une partie terminale de la feuille plate (2) ou une partie terminale de la feuille ondulée (3) ;
**caractérisé en ce que**
la partie centrale d'enroulement (6) présente un diamètre intérieur inférieur ou égal à 3 mm.

2. Substrat destiné à porter un catalyseur selon la revendication 1, dans lequel la partie centrale d'enroulement (6) présente un diamètre intérieur inférieur ou égal à 2,5 mm.

3. Substrat destiné à porter un catalyseur selon la revendication 1, dans lequel la partie centrale d'enroulement (6) présente un diamètre intérieur inférieur ou égal à 2 mm.

4. Substrat destiné à porter un catalyseur selon l'une quelconque des revendications 1 à 3, dans lequel :
R représente le diamètre (mm) de chaque trou (8), U représente le rapport d'ouverture (%) des trous (8) présents dans la partie plate en forme de profilé (2a), V représente le diamètre intérieur (mm) de la partie centrale d'enroulement (6), W représente l'épaisseur de feuille (µm) de la feuille métallique (2, 3), et L est formulé comme suit : $L = \left(R+3\right) \times U \times \left(V-1\right) \times 50 / \left(W+\left|50-W\right|\times 0,5\right)$
(où : 0,5 ≤ R ≤ 6, 20 ≤ U ≤ 60, 1 ≤ V ≤ 3, 20 ≤ W ≤ 100) ;
la valeur de L est inférieure ou égale à une valeur seuil prédéterminée, et
la valeur seuil prédéterminée est de 900.

5. Substrat destiné à porter un catalyseur selon la revendication 4, dans lequel la valeur seuil prédéterminée est de 700.

6. Substrat destiné à porter un catalyseur selon la revendication 4, dans lequel la valeur seuil prédéterminée est de 500.

7. Substrat destiné à porter un catalyseur selon la revendication 4, dans lequel la valeur seuil prédéterminée est de 300.

8. Substrat destiné à porter un catalyseur selon l'une quelconque des revendications 1 à 7, dans lequel la feuille métallique présente une épaisseur de feuille inférieure ou égale à 70 µm.

9. Support de catalyseur (1) comprenant :
un corps en nid d'abeilles (4) formé par enroulement d'une feuille plate (2) et d'une feuille ondulée (3) constituées chacune d'une feuille métallique, ledit corps en nid d'abeilles (4) portant un catalyseur, et
une enveloppe extérieure (5) placée dans une position entourant une surface circonférentielle extérieure du corps en nid d'abeilles (4) ;
une pluralité de trous (8) étant formés dans la feuille plate (2) et la feuille ondulée (3),
une partie plate en forme de profilé (2a) s'étendant dans une partie centrale d'enroulement (6) du corps en nid d'abeilles (4),
une partie de la pluralité de trous (8) étant formés dans la partie plate en forme de profilé (2a),
la partie plate en forme de profilé (2a) consistant en une partie terminale de la feuille plate (2) ou une partie terminale de la feuille ondulée (3) ;
**caractérisé en ce que**
la partie centrale d'enroulement (6) présente un diamètre intérieur inférieur ou égal à 3 mm.

10. Support de catalyseur (1) selon la revendication 9, le support de catalyseur (1) étant destiné à la purification des gaz d'échappement d'un moteur monocylindre.
